(19)

Europäisches
Patentamt
European
Patent Office
Office européen
des brevets

(11) **EP 3 511 892 A1**

(12) **EUROPEAN PATENT APPLICATION**
published in accordance with Art. 153(4) EPC

(43) Date of publication:
**17.07.2019 Bulletin 2019/29**

(21) Application number: **17848017.4**

(22) Date of filing: **31.07.2017**

(51) Int Cl.:
***G06Q 30/02*** (2012.01)

(86) International application number:
**PCT/CN2017/095251**

(87) International publication number:
**WO 2018/045844 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.09.2016 CN 201610814122**

(71) Applicant: **Tencent Technology (Shenzhen)
Company Limited
Shenzhen, Guangdong 518057 (CN)**

(72) Inventors:
• LIU, Rijia
 **Shenzhen
 Guangdong 518057 (CN)**
• LIU, Zhibin
 **Shenzhen
 Guangdong 518057 (CN)**
• ZHENG, Bo
 **Shenzhen
 Guangdong 518057 (CN)**

(74) Representative: **Penza, Giancarlo
Bugnion S.p.A.
Viale Lancetti, 17
20158 Milano (IT)**

(54) **MULTIMEDIA DATA PUBLISHING METHOD, DEVICE , SERVER AND STORAGE MEDIUM**

(57) The present disclosure discloses a method and an apparatus for publishing multimedia data, a server, and a storage medium, and belongs to the field of Internet technologies. The method includes: acquiring a user identity of a terminal, and determining a target media position of the terminal; acquiring a plurality of pieces of multimedia data; for each piece of the multimedia data, acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position; and selecting target multimedia data from the plurality of pieces of multimedia data, sending the target multimedia data to the terminal. When published target data is calculated, the impact of the credit feature on the published target data is considered. The present disclosure improves an accuracy rate of the published target data, so as to improve a publishing accuracy rate and a conversion rate of the multimedia data, when target multimedia data is selected according to the published target data.

FIG. 2

## Description

RELATED APPLICATION

This application claims priority to Chinese Patent Application No. 201610814122.3, entitled **"METHOD AND APPARATUS FOR DELIVERING MULTIMEDIA DATA"** and filed with the Chinese Patent Office on September 9, 2016, which is incorporated by reference in its entirety.

FIELD OF THE TECHNOLOGY

Embodiments of the present invention relate to the field of Internet technologies, and in particular, to a method and an apparatus for publishing multimedia data, a server, and a storage medium.

BACKGROUND OF THE DISCLOSURE

With the development of Internet technologies, a spread range of network information gradually increases, and more advertisements start to spread in the form of network advertisement. A large number of media applications exist in the network, and the media applications provide a lot of media positions for many advertisements. Therefore, how to determine an advertisement to be published at each media position becomes a problem that needs to be resolved.

SUMMARY

To resolve a related technical problem, embodiments of the present invention provide a method and an apparatus for publishing multimedia data, a server, and a storage medium. The technical solutions are as follows:

According to a first aspect, a method for publishing multimedia data is provided, and the method includes: acquiring a user identity of a terminal, and determining a target media position of the terminal; acquiring a plurality of pieces of to-be-published multimedia data; for each piece of the to-be-published multimedia data, acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position, the first credit feature referring to a credit feature of a user that the user identity is corresponding to, the second credit feature referring to a credit feature of a user group to which the multimedia data belongs, the third credit feature referring to a credit feature of a user that the target media position is oriented to, and the user that the target media position is oriented to including an access user and a clicking user; selecting, according to the published target data corresponding to the plurality of pieces of to-be-published multimedia data, target multimedia data from the plurality of pieces of multimedia data; and sending the target multimedia data to the terminal.

According to a second aspect, an apparatus for publishing multimedia data is provided, and the apparatus includes: an acquiring module, configured to acquire a user identity of a terminal, and to determine a target media position of the terminal; the acquiring module being further configured to acquire a plurality of pieces of to-be-published multimedia data, and for each piece of the to-be-published multimedia data, to acquire, according to at least one of a first credit feature, a second credit feature and a third credit feature, a user attribute feature of the user identity, a content attribute feature of the multimedia data, and a position attribute feature of the target media position, published target data when the multimedia data is published to the target media position, the first credit feature referring to a credit feature of a user that the user identity is corresponding to, the second credit feature referring to a credit feature of a user group to which the multimedia data belongs, the third credit feature referring to a credit feature of a user that the target media position is oriented to, and the user that the target media position is oriented to including an access user and a clicking user; a selection module, configured to select, according to the published target data corresponding to the plurality of pieces of to-be-published multimedia data, target multimedia data from the plurality of pieces of multimedia data; and a sending module, configured to send the target multimedia data to the terminal.

According to a third aspect, a server is provided. The server includes a central processing unit, a network interface, and a memory, the memory stores a set of program codes, and the central processing unit is configured to invoke the program codes stored in the memory by using a system bus, to perform the following operations: acquiring a user identity of a terminal, and determining a target media position of the terminal; acquiring a plurality of pieces of to-be-published multimedia data; for each piece of the to-be-published multimedia data, acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position, the first credit feature referring to a credit feature of a user that the user identity is corresponding to, the second credit feature referring to a credit feature of a user group to which the multimedia data belongs, the third credit feature referring to a credit feature of a user that the target media position is oriented to, and the user that the target media position is oriented to including an access user and a clicking user; selecting, according to the published target data corresponding to the plurality of pieces of to-be-published multimedia data, target multimedia data from the plurality of pieces of multimedia data; and sending the target multimedia data to the terminal.

According to a fourth aspect, a computer readable storage medium is provided. The computer readable storage medium stores at least one instruction, at least one program, a code set or an instruction set. The instruction, the program, the code set or the instruction set is loaded and executed by a processor to implement the operations performed in the method for publishing multimedia data according to the first aspect.

The technical solutions provided in the embodiments of the present invention have the following beneficial effects: by acquiring a user identity of a terminal, and determining a target media position of the terminal, for each piece of the to-be-published multimedia data, when published target data is calculated, at least one of a user, multimedia data, and a credit feature of a target media position is introduced, and the impact of the credit feature on the published target data is considered, which improves flexibility, and improves an accuracy rate of the published target data, so as to improve a publishing accuracy rate and a conversion rate of the multimedia data, when target multimedia data is selected according to the published target data.

BRIEF DESCRIPTION OF THE DRAWINGS

To describe the technical solutions of the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic structural diagram of a system for publishing multimedia data according to an embodiment of the present invention;

FIG. 2 is a flowchart of a method for publishing multimedia data according to an embodiment of the present invention;

FIG. 3 is a schematic structural diagram of an apparatus for publishing multimedia data according to an embodiment of the present invention; and

FIG. 4 is a schematic structural diagram of a server according to an embodiment of the present invention.

DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments in the present invention without creative effects shall fall within the protection scope of the present disclosure.

Before embodiments of the present invention are described in detail, concepts related to the embodiments of the present invention are first illustrated as follows:

1. A media position refers to a position on a media application page capable of presenting multimedia data, for example, an advertising position on any application page of a terminal.

2. Multimedia data refer to video data, audio data, and the like, and the multimedia data may be presented on a media position for a user to browse, to achieve a particular advertising effect, for example, an advertisement published by an advertiser.

3. Published target data refer to target data brought for a user group to which multimedia data belongs, when the multimedia data is published at a target media position.
For example, the published target data may be published income data, and represent income brought for a user group to which multimedia data belongs, when the multimedia data is published at a target media position. For example, when multimedia data quite matching the target media position and a user is published at a target media position, a possibility that the multimedia data attracts the user increases to a great extent. This is equivalent to acquiring a potential user for a user group to which the multimedia data belongs, that is, bringing hidden income

4. A user attribute feature refers to an attribute feature of a user, and is determined according to attribute information of the user, for example, age, gender and an education level of the user.
A content attribute feature refers to an attribute feature of multimedia data, and is determined according to attribute information of the multimedia data, for example, a type, a format, and a data length of the multimedia data.
A position attribute feature refers to an attribute feature of a media position, and is determined according to attribute information of the media position, for example, a type, a publishing condition, a position of the media position.

5. A first credit feature refers to a credit feature of a user that currently accesses a target media position, and may represent a credit level of the user.

A second credit feature refers to a credit feature of a user group that multimedia data belongs to, that is, a credit feature of a user group that publishes the multimedia data, may represent a credit level of the user group, and represents a credit level of the multimedia data to an extent. The user group includes a plurality of member users, and the second credit feature may be synthetically determined according to credit levels of the plurality of member users.

A third credit feature refers to a credit feature of a user that a target media position is oriented to, and may be determined by an access user credit feature and a clicking user credit feature of the target media position. The access user credit feature may represent a credit level of a user that accesses the target media position, and the clicking user credit feature may represent a credit level of a user that clicks on the target media position. Because an access user and a clicking user may be considered as users matching the target media position, the third credit feature may represent a credit level of the target media position to an extent.

It should be noted that the foregoing first credit feature, the second credit feature and the third credit feature are all determined according to a credit feature of one or more users. For a user, a credit feature of the user may be determined according to data of the user, for example, online behavior data or offline behavior data. Particularly, a credit feature may be determined according to financial data of a user, for example, credit card documentation and bank loan documentation. The data may indicate a current financial condition of the user, and reflects a credit level of the user in a period in the future to an extent.

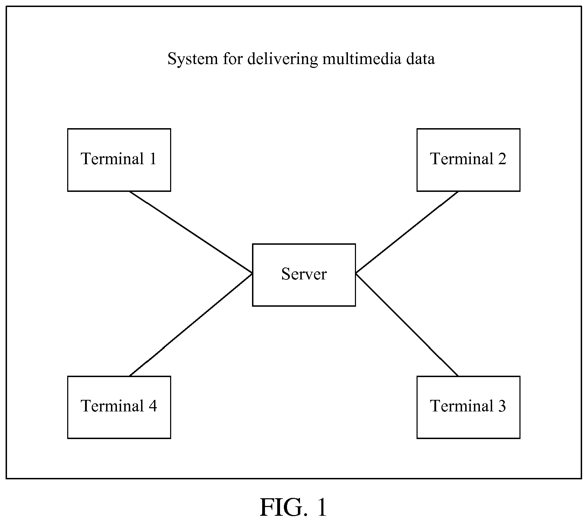

FIG. 1 is a schematic structural diagram of a system for publishing multimedia data according to an embodiment of the present invention. Referring to FIG. 1, the system for publishing multimedia data includes a server and a plurality of terminals (in FIG. 1, four terminals are used as an example). The server may provide each terminal with multimedia data publishing service.

For any terminal, the terminal includes a lot of media positions. When the server is to publish multimedia data at a target media position of the terminal, a user identity of the terminal may be acquired, a target media position of the terminal may be determined, and a plurality of pieces of to-be-published multimedia data may be acquired. Published target data is obtained by calculating according to a feature of each piece of the multimedia data, a feature of a user that the user identity is corresponding to, and a feature of the target media position. Greater target multimedia data of the published target data is selected to publish at the target media position. When the user is browsing the media application page, the target multimedia data can be browsed at the target media position.

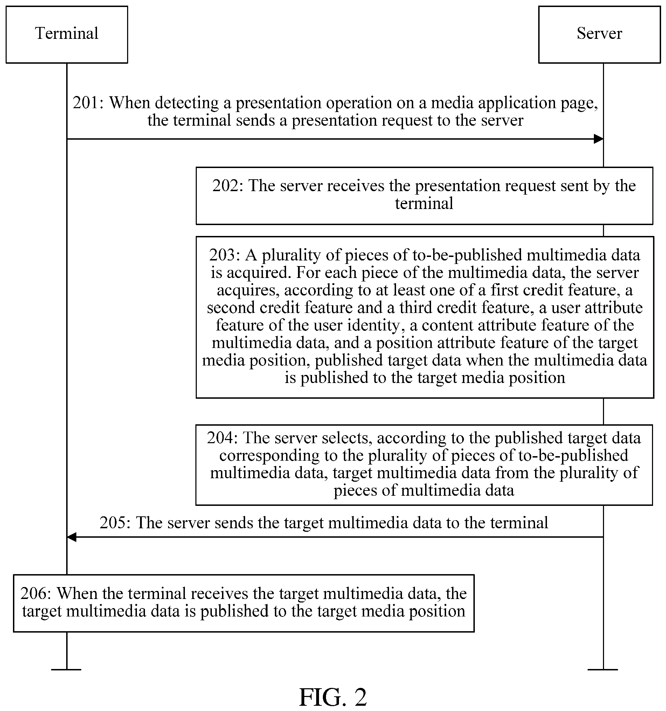

FIG. 2 is a flowchart of a method for publishing multimedia data according to an embodiment of the present invention. The embodiment of the present invention is applied to the system for publishing multimedia data shown in FIG. 1, and interaction subjects are a server and a terminal. Referring to FIG. 2, the method includes the following:

S201: When detecting a presentation operation on a media application page, the terminal sends a presentation request to the server.

S202: The server receives the presentation request sent by the terminal.

The media application may include a website, application software, and the like. The media application page may be any page in the media application, for example, a webpage and social application software, which is not limited in the embodiment of the present invention. The terminal may be a terminal that can access a media application, for example, a mobile phone and a personal computer. The terminal may log in to the media application based on a user identity. The user identity is used for uniquely determining a corresponding user, may be a user account, a user nickname, or the like registered on the server, or may alternatively be a device number, a phone number, or the like of the terminal, which is not limited in the embodiment of the present invention.

When the user expects to open the media application page, a presentation operation on the media application page is triggered. When the terminal detects the presentation operation, to determine content to be presented on media application page, the terminal sends a presentation request to the server. The presentation request carries the user identity, to request to acquire the media application page.

In actual application, the media application page includes not only content to be presented, but also a media position, and multimedia data may be published at the media position. Therefore, when the terminal sends a presentation request, the presentation request may further carry a target media position on the media application page, so that the server can publish multimedia data at the target media position. When the server receives the presentation request, the server may acquire the user identity of the terminal and the target media position according to the presentation request.

A media application page may include one or more target media positions. The target media position may be any position located on the media application page, and the target media position may present different types of multimedia data such as picture data, audio data and video data, which is not limited in the embodiment of the present invention.

To facilitate the server to differentiate different target media positions, the presentation request may specifically carry attribute information of the target media positions, for example, titles of media applications where the target media positions are located, addresses of pages where the target media positions are located, types of the target media positions, context information of the target media positions in the media application pages, which is not limited in the embodiment of the present invention.

S203: A plurality of pieces of to-be-published multimedia data is acquired. For each piece of the multimedia data, the server acquires, according to at least one of a first credit feature $u_1$, a second credit feature $a_1$ and a third credit feature m, a user attribute feature $u_0$ of the user identity, a content attribute feature $a_0$ of the multimedia data, and a position attribute feature $c_0$ of the target media position, published target data W when the multimedia data is published to the target media position.

The server stores the plurality of pieces of to-be-published multimedia data. When the server receives the presentation request, the server acquires the plurality of pieces of to-be-published multimedia data, and selects target multimedia data from the plurality of pieces of to-be-published multimedia data, to publish to the target media position. The plurality of pieces of multimedia data may be uploaded to the server by a plurality of advertisers, or be uploaded to the server by any network user, which is not limited in the embodiment of the present invention.

Specifically, step S203 may include any one of the following manners:

A first manner: acquiring according to the first credit feature $u_1$, the third credit feature m, the user attribute feature $u_0$, the content attribute feature $a_0$ and the position attribute feature $c_0$, including step S2031 to S2033:

S2031: The server forms a user feature u' by using the first credit feature $u_1$ and the user attribute feature $u_0$.

The server may acquire a credit feature and an attribute feature corresponding to each user identity in advance. When the server receives the presentation request, the first credit feature $u_1$ and the user attribute feature $u_0$ may be acquired. The user feature u' is formed by using $u_1$ and $u_0$, that is, $u'=(u_1,u_0)$.

The user attribute feature is used for representing a basic attribute of a user, and may be determined according to attribute information of the user. The attribute information may include age, gender, an education level, hobby, profession, and the like, which is not limited in the embodiment of the present invention.

The credit feature is used for representing a level of a user credit level, and may be determined according to data of the user. The data may include financial data, online behavior data, offline behavior data, and the like.

First, financial data includes, but is not limited to: credit information, public record, and the like of a user. The credit information includes credit card documentation, bank loan documentation, personal asset record and other credit records. The public record includes a record such as an individual housing provident fund, or individual old-age insurance, which is not limited in the embodiment of the present invention.

The financial data is acquired according to a financial condition of the user in a period in the past or an operation performed on related financial information, may be obtained by the server by using user information filled in various applications in a mobile phone, a tablet computer or a personal computer by the user, or may be acquired by reporting by various applications related to finance according to an operation of the user. The applications related to finance may include a financing management platform, shopping software, and the like. Alternatively, the financial data may be sent to the server after acquired by a third party server. The third party server may be a bank server, an insurance company server, and the like, which is not limited in the embodiment of the present invention.

Second, online behavior data includes, but is not limited to:

1. basic population attribute information of a user such as name, age, gender, area, an education level, and profession;

2. virtual value-added service data, such as virtual account role play, game prop purchase, film member service, cloud storage space value-added service, and music data package;

3. social interaction behavior data, such as chatting, email, voice communication, microblog space publishing, Douban comments, Zhihu question answering, and official account passage reading;

4. economic behavior data, such as payment, financing management, shopping, stock, fund, P2P, and finance;

5. entertainment and leisure behavior data, such as video on demand, playing music, singing, and reading news;

6. educational behavior data, such as online reading, public class learning, professional examination exercises, skill training, and translation software usage; and

7. other Internet mobile application behavior data, such as App downloading, and searching.

Third, offline behavior data includes, but is not limited to:

1. O2O (online to offline) life service information, such as housekeeping service, city service, and aesthetic health care;

2. wearable device data, such as medical health, and exercise;

3. LBS (location based service) geographic position data, such as guiding, signing in, and a special vehicle; and

4. tourism trip data, such as ticket business ordering, and hotel reservation.

The foregoing offline behavior data and online behavior data may be obtained by using user information filled in various applications in a mobile phone, a tablet computer or a personal computer by the user, or may be acquired by reporting by the various applications according to an operation of the user. The applications may include an instant messaging application program, a game client, an APP downloading platform, a financing management platform, shopping software, which is not limited in the embodiment of the present invention.

S2032: Acquire the third credit feature m according to an access user credit feature A and a clicking user credit feature B of the target media position.

The third credit feature m represents a level of a credit level of a user that the target media position is oriented to. The user that the target media position is oriented to may include an access user and a clicking user. The access user refers to a user that accesses the target media position, that is, a user views the target media position after opening the media application page. The clicking user refers to a user that clicks on the target media position, that is, a user clicks on the target media position after publishing each piece of multimedia data at the target media position.

Optionally, step S2032 may include the following steps S1 to S3:

S1: The server acquires a first credit distribution feature M according to credit features of a plurality of access users of the media application page in a plurality of preset time periods.

Aij is used for representing a credit feature of an ith access user of the target media position in a jth time period, a formula $M_j=F(A_{1j},A_{2j},...,A_{nj})$ may be applied to acquire a credit distribution feature $M_j$ in the jth time period, and combine credit distribution features of a plurality of time periods into the first credit distribution feature M, that is, $M=(M_1, M_2..., M_j,...M_p)$. n represents the number of access users, $i\in(1,n)$, p represents the number of time periods, $j\in(1,p)$, and $F(\cdot)$ represents a distribution function, and may be a frequency statistical function, a frequency conversion function, and the like, which is not limited in the embodiment of the present invention.

S2: The server acquires a second credit distribution feature N according to credit features of a plurality of clicking users of the target media position in the plurality of preset time periods.

When the second credit distribution feature N is acquired, $B_{ij}$ represents a credit feature of an ith clicking user of the target media position in a jth time period, a formula $N_j=F(B_{1j},B_{2j},...,B_{sj})$ may be applied to acquire a credit distribution feature $N_j$ in the jth time period, and combine credit distribution features of a plurality of time periods into the second credit distribution feature N, that is, $N=(N_1, N_2...N_j,...,N_q)$. s represents the number of clicking users, $i\in(1,s)$, q represents the number of time periods, $j\in(1,q)$.

3. The server acquires a difference feature D between the first credit distribution feature M and the second credit distribution feature N, and forms the third credit feature m by using the first credit distribution feature M and the difference feature D.

After the first credit distribution feature M and the second credit distribution feature N are acquired, a formula D=P(M, N) is applied to calculate the difference feature D, and the third credit feature m=(M, D). $P(\cdot)$ may be functions such as a KL distance (Kullback-Leibler divergence, relative entropy) function, and a $\psi$ distance function. A distance between M and N may be as the difference feature by using the distance functions. $P(\cdot)$ is not limited in the embodiment of the present invention.

The foregoing steps 1 to 3 only use first calculating M and M and then calculating D as an example. In actual application, for each time period, the first credit distribution feature $M_j$ of a plurality of access users in the time period and the second credit distribution feature $N_j$ of a plurality of clicking users in the time period may also be calculated first. Then $D_j=P(M_j,N_j)$ is calculated to obtain a difference feature of each time period, and difference features of a plurality of time periods are combined into D. A calculation sequence of the server is not limited in the embodiment of the present invention.

S2033: Acquire the published target data W according to the user feature u', the content attribute feature $a_0$, the position attribute feature $c_0$, and the third credit feature m.

The content attribute feature $a_0$ is determined according to attribute information of the multimedia data. The attribute information of the multimedia data may include information such as the multimedia data, a type of the multimedia data, publishing time of the multimedia data, or a publisher, which is not limited in the embodiment of the present invention. The position attribute feature $c_0$ is determined according to attribute information of the target media position. The attribute information of the target media position may include a name, a type and an address of the media application page, context information of the target media position on the media application page, or the like, which is not limited in the embodiment of the present invention.

Optionally, the server applies a formula $W=\mu(a_0,u',c_0)*v(a_0,u',m)$ to acquire the published target data, where $\mu(a_0,u',c_0)$ represents a click-through rate when the multimedia data is published to the target media position, that is, a probability that a user browsing the multimedia data clicks on the target media position, and

$v(a_0,u',m)$ represents a click value when the multimedia data is published to the target media position, that is, a value produced when a user clicks on the target media position each time. A product of the click-through rate and the click value is the published target data.

The click-through rate $\mu(a_0,u',c_0)$ may be calculated by using a function used for predicting a click-through rate, or may be calculated by using a click-through rate prediction model trained in advance. The click vale $v(a_0,'u',m)$ may be calculated by using a function used for predicting a click value, or may be calculated by using a click value prediction model trained in advance. Calculation manners of the click-through rate and the click value are not limited in the embodiment of the present invention.

It should be noted that the published target data W is used for measuring target data produced when to-be-published multimedia data is published to a target media position. Greater published target data W indicate greater target data produced when the to-be-published multimedia data is published to the target media position, and less published target data W indicate less target data produced when the to-be-published multimedia data is published to the target media position.

In a possible implementation, the published target data may be published income data, configured to measure income produced when multimedia data is published to a target media position. Greater published income data indicate greater income produced when the multimedia data is published to the target media position, and less published income data indicate less income produced when the multimedia data is published to the target media position.

A second manner: acquiring according to the second credit feature $a_1$, the user attribute feature $u_0$, the content attribute feature $a_0$ and the position attribute feature $c_0$, including steps S2034 and S2035:
S2034: The server acquires the second credit feature $a_1$ according to credit features and weight coefficients of a plurality of member users included in the user group to which the multimedia data belongs, and forms a content feature a' of the multimedia data by using the second credit feature $a_1$ and the content attribute feature $a_0$ of the multimedia data, that is, $a'=(a_1, a_0)$.

The user group to which the multimedia data belongs represents a user group that publishes the multimedia data, and may be an institution, a group, an enterprise, or the like, which is not limited in the embodiment of the present invention. The user group includes a plurality of member users, credit levels of the plurality of members may represent a credit level of the user group to an extent. Higher credit levels of the plurality of members indicate a higher credit level of the user group, and lower credit levels of the plurality of members indicate a lower credit level of the user group. Therefore, the second credit feature may be determined according to credit features of the plurality of member users.

Optionally, the server acquires a product value of a credit feature $C_j$ and a weight coefficient $\alpha_j$ of each of the member users j, to obtain a weighted credit feature $\alpha_j C_j$, acquire a sum value of the weighted credit features of the plurality of member users, and obtain the second credit feature $a_1$. That is, a formula $a_1=Z(\alpha_1 C_1, \alpha_2 C_2, ..., \alpha_k C_k)$ is applied to calculate, $Z(\bullet)$ represents a sum function, and k represents the number of the members of the user group.

S2035: Acquire the published target data W according to the user attribute feature $u_0$, the content feature a' and the position attribute feature $c_0$.

Optionally, the server applies a formula $W=\mu(a',u_0,c_0)*v(a',u_0)$ to acquire the published target data. $\mu(a',u_0,c_0)$ represents a click-through rate when the multimedia data is published to the target media position, and $v(a',u_0)$ represents a click value when the multimedia data is published to the target media position.

Calculation methods of the click-through rate, the click value and the published target data in step S2035 are similar to those in step S2033, and details are not described herein again.

A third manner: acquiring according to the first credit feature $u_1$, the second credit feature $a_1$, the third credit feature m, the user attribute feature $u_0$, the content attribute feature $a_0$, and the position attribute feature $c_0$, including steps S2036 to S2039:

S2036: The server forms the user feature u' by using the first credit feature and the user attribute feature.

S2037: Acquire the second credit feature $a_1$ according to the credit features and the weight coefficients of the plurality of member users included in the user group to which the multimedia data belongs, and form the content feature a' of the multimedia data by using the second credit feature and the content attribute feature of the multimedia data.

S2038: Acquire the third credit feature m according to an access user credit feature and a clicking user credit feature of the target media position.

Step S2036 is similar to the foregoing step S2031, step S2037 is similar to the foregoing step S2034, and step S2039 is similar to those in step S2032, and details are not described herein again.

S2039: Acquire the published target data W according to the user feature u', the content feature a', the third credit feature m, and the position attribute feature $c_0$ of the target media position.

Optionally, a formula $W=\mu(a',u',c_0,m)*v(a',u',m)$ is acquired to acquire the published target data. $\mu(a',u',c_0,m)$ represents a click-through rate when the multimedia data is published to the target media position, and $v(a',u',m)$ represents a click value when the multimedia data is published to the target media position.

Calculation methods of the click-through rate, the click value and the published target data in step S2039 are similar to those in step S2033, details are not described herein again.

S204: The server selects, according to the published target data corresponding to the plurality of pieces of to-be-published multimedia data, target multimedia data from the plurality of pieces of multimedia data.

Greater published target data of the multimedia data indicates greater target data produced when the multimedia data is published to the target media position. Therefore, the server sorts a plurality of pieces of multimedia data in descending order of published target data after calculating published target data of the plurality of pieces of multimedia data, and selects a preset number of pieces of multimedia data ranking top, as target multimedia data to publish to the target media position. The preset number may be determined by the terminal, or be determined by the server in advance, or be determined by the server according to a total number of pieces of to-be-published multimedia data and a preset ratio, which is not limited in the embodiment of the present invention.

For example, a determined number of the plurality of pieces of multimedia data is five, the five pieces of multimedia data and published target data corresponding thereto are shown in Table 1. If the preset number is three, target multimedia data A2, A4, and A1 ranking top 3 is selected to publish to the target media position.

Table 1

| Multimedia Data A | Published Target Data W |
|---|---|
| A1 | 10 |
| A2 | 40 |
| A3 | 8 |
| A4 | 11 |
| A5 | 9 |

In addition, if some multimedia data sets a publishing condition, the server first selects multimedia data whose publishing condition may be satisfied by the target media position and the user identity, from a plurality of pieces of multimedia data, and then selects target multimedia data from the multimedia data in descending order of published target data.

S205: The server sends the target multimedia data to the terminal.

S206: When the terminal receives the target multimedia data, the target multimedia data is published to the target media position.

The server not only sends the target multimedia data to the terminal, but also sends the media application page to the terminal. The terminal presents the media application page, and publishes the target multimedia data to the target media position, thereby presenting the target multimedia data at the target media position on the media application page.

For example, when the target multimedia data is picture data, the terminal presents the picture data at the target media position. Alternatively, when the target multimedia data is video data, the terminal plays the video data at the target media position.

Further, when the server sends a plurality of pieces of target multimedia data to the terminal, the terminal may publish the plurality of pieces of target multimedia data to the target media position, that is, scrolling present the plurality of pieces of target multimedia data at the target media position.

In a possible application scenario, publishing multimedia data may be delivering an advertisement. Correspondingly, publishing the target multimedia data to the target media position is delivering a target advertisement at the target media position.

A first point that should be noted is that the embodiment of the present invention is described by using only that when a server receives a presentation request of a terminal, the server determines to-be-published target multimedia data for the terminal, as an example. However, in actual application, the server may further use the method provided in the embodiment of the present invention to acquire a user identity of a terminal and determine a target media position of the terminal, determine to-be-published target multimedia data for the target media position of the terminal, send the target multimedia data to the terminal at any time. The received target multimedia data is published to the target media position by the terminal, to present to a user.

A second point that should be noted is that the embodiment of the present invention is described by using only a terminal as an example. In fact, a plurality of terminals needs to open media application pages. Multimedia data needs to be published at target media positions of the media application pages. The server may determine to-be-published target multimedia data for the plurality of terminals, and send the target multimedia data to the corresponding terminals. The acquired target multimedia data is presented at a target media positions by each terminal.

Further, in the embodiment of the present invention, the server calculates published target data of a plurality of pieces of multimedia data for the terminal, to select multimedia data of greater published target data to publish. In actual application, when the server publishes for a plurality of terminals, the server may publish with a purpose of a greatest total number of published target data. That is, for a plurality of pieces of multimedia data and a plurality of target media positions, the server may combine the plurality of pieces of multimedia data with the plurality of target media positions in different manners, thereby working out various publishing strategies. Each publishing strategy includes a plurality of publishing combinations. Each publishing combination includes multimedia data and a target media position corresponding to each other. The server uses the manner provided in the embodiment of the present invention to calculate published target data of each publishing combination, thereby calculating a sum of published target data of the plurality of publishing combinations in each publishing strategy, that is, a total number of published target data of each publishing strategy. In this case, a publishing strategy of a greatest total number of published target data may be selected, to publish according to a plurality of publishing combinations in the selected publishing strategy.

By using the manner, a plurality of target media positions may be roundly considered, instead of only a single target media position. This can optimize a global publishing strategy, and ensure maximization of published target data.

A third point that should be noted is that the embodiment of the present invention is described by using only that a same server provides a terminal with a media application page and publishes multimedia data at a target media position, as an example. However, in actual application, a media application page may be provided and multimedia data may be published by different servers respectively.

For example, a media application server provides a terminal with to-be-presented media application page, and a publishing management server is configured to publish multimedia data at a target media position of the media application page. When the terminal detects a presentation operation on a media application page, the server sends a presentation request to the media application server. The presentation request is sent to the publishing management server by the media application server. Then the media application server returns the media application page to the terminal. After the publishing management server sends the multimedia data to the terminal, the terminal may publish the multimedia data at the target media position.

In views of different needs of users of different credit levels to multimedia data, in the embodiment of the present invention, the impact of a credit level on publishing multimedia data is considered. Published target data is calculated according to credit features of a user, multimedia data and a target media position. Suitable target multimedia data is selected for the target media position to publish according to calculated published target data. More accurate calculation on the published target data makes publishing of the target multimedia data more accurate. This satisfies the different needs of the users of the different credit levels to the multimedia data.

In the method provided in the embodiment of the present invention, by receiving a presentation request sent by a terminal, for each piece of the to-be-published multimedia data, when published target data is calculated, at least one of a user, multimedia data, and a credit feature of a target media position is introduced, and the impact of the credit feature on the published target data is considered, which improves flexibility, and improves an accuracy rate of the published target data, so as to improve a publishing accuracy rate and a conversion rate of the multimedia data, when target multimedia data is selected according to the published target data.

Further, in the embodiment of the present invention, by combining a credit feature of an access user and a credit feature of a clicking user, financial consumption tendencies of users that a target media position is oriented to may be indirectly introduced, the impact of financial conditions of the users on target multimedia data published to the target media position may be reflected. In addition, when a first credit distribution feature and a difference feature between the first credit distribution feature and a second credit distribution feature are added, a value of target multimedia data may be evaluated for different media applications. The foregoing descriptions are beneficial to adjusting a publishing strategy of target multimedia data, reducing presentation of obstructed multimedia data, avoiding interference to a user, thereby improving a conversion rate of the target multimedia data.

In addition, by combing a credit feature of a user group to which target multimedia data belongs, a determining ability on multimedia data quality of the user group may be improved. This is beneficial to evaluating a value of target multimedia data, is beneficial to allocate different target multimedia data traffic to different media applications, reduces presentation of target multimedia data of low quality, thereby improving a click-through rate of target multimedia data, and improving a reputation and a conversion rate of the target multimedia data.

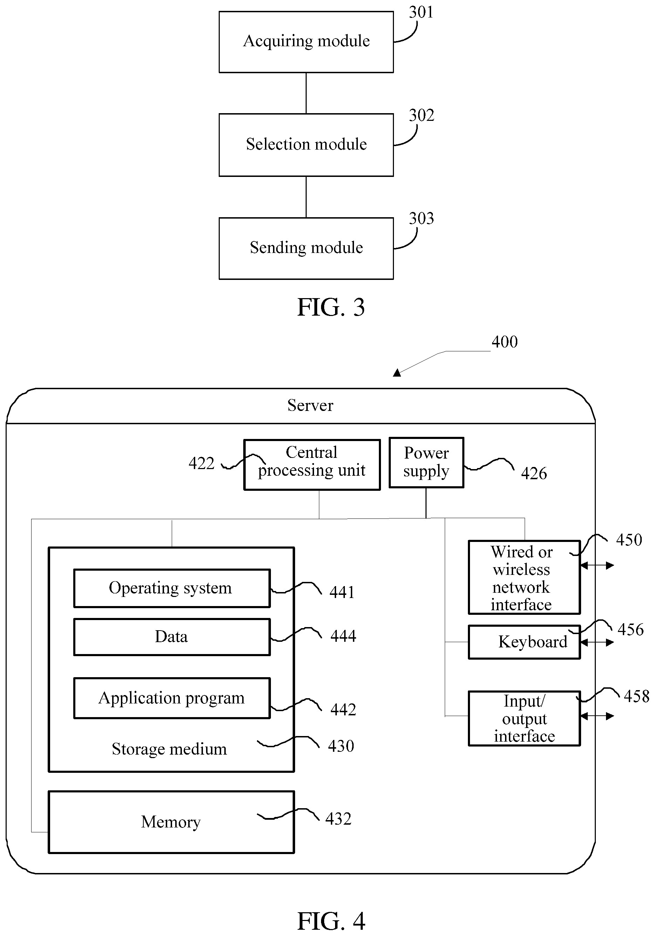

FIG. 3 is a schematic structural diagram of an apparatus for publishing multimedia data according to an embodiment of the present invention. Referring to FIG. 3, the apparatus includes an acquiring module 301, a selection module 302, and a sending module 303.

The acquiring module 301 is configured to perform the foregoing steps S202 and S203.

The selection module 302 is configured to perform the foregoing step S204.

The sending module 303 is configured to perform the foregoing step S205.

In the apparatus provided in the embodiment of the present invention, by receiving a presentation request sent by a terminal, for each piece of the to-be-published multimedia data, when published target data is calculated, at least one of a user, multimedia data, and a credit feature of a target media position is introduced, and the impact of the credit feature on the published target data is considered, which improves flexibility, and improves an accuracy rate of the published target data, so as to improve a publishing accuracy rate and a conversion rate of the multimedia data, when target multimedia data is selected according to the published target data.

It should be noted that when the apparatus for publishing multimedia data provided in the foregoing embodiment publishes multimedia data, it is illustrated with an example of division of the foregoing function modules. In practical application, the foregoing functions may be distributed to different function modules according to requirements, that is, the internal structure of the server is divided into different function modules, so as to complete all or part of the functions described above. In addition, the embodiment of the method for publishing multimedia data provided in the foregoing embodiment belongs to the same concept as the embodiment of the apparatus for publishing multimedia data. For a specific implementation process of the apparatus, refer to the method embodiment, and details are not described herein again.

FIG. 4 is a schematic structural diagram of a server according to an embodiment of the present invention. The server 400 may vary greatly due to different configurations or performance, and may include one or more central processing units (CPUs) 422 (for example, one or more processors), a memory 432, and one or more storage mediums 430 (for example, one or more mass storage devices) that store an application program 442 or data 444. The memory 432 and the storage medium 430 may be transient or persistent storages. A program stored in the storage medium 430 may include one or more modules (not shown), and each module may include a series of instruction operations in the server. Still further, the CPU 422 may be configured to communicate with the storage medium 430, and perform, on the server 400, a series of instructions and operations in the storage medium 430.

The server 400 may further include one or more power supplies 426, one or more wired or wireless network interfaces 450, one or more input/output interfaces 458, one or more keyboards 456, and/or one or more operating systems 441, for example, Windows Server™, Mac OS X™, Unix™, Linux™, or FreeBSD™.

The server 400 may be configured to perform steps performed by a server in the method for publishing multimedia data provided in the foregoing embodiments.

An embodiment of the present invention further provides a computer readable storage medium. The computer readable storage medium stores at least one instruction, at least one program, a code set or an instruction set. The instruction, the program, the code set or the instruction set is loaded and executed by a processor to implement the operations performed in the method for publishing multimedia data according to the foregoing embodiments. For example, the computer readable storage medium may be a ROM, a random access memory (RAM), a CD-ROM, a magnetic tape, a floppy disk, or an optical data storage device.

A person of ordinary skill in the art may understand that all or some of the steps of the foregoing embodiments may be implemented by using hardware, or may be implemented by a program instructing relevant hardware. The program may be stored in a computer readable storage medium. The storage medium may be a read-only memory, a magnetic disk, an optical disc, or the like.

The foregoing descriptions are merely preferred embodiments of the present invention, but are not intended to limit the present disclosure. Any modification, equivalent replacement, or improvement made within the spirit and principle of the present disclosure shall fall within the protection scope of the present disclosure.

**Claims**

1. A method for publishing multimedia data, comprising:

   acquiring a user identity of a terminal, and determining a target media position of the terminal;
   acquiring a plurality of pieces of to-be-published multimedia data;
   for each piece of the to-be-published multimedia data, acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position, the first credit feature referring to a credit feature of a user that the user identity is corresponding to, the second credit feature referring to a credit feature of a user group to which the multimedia data belongs, the third credit feature referring to a credit feature of a user that the target media position is oriented to, and the user that the target media position is oriented to comprising an access user and a clicking user;
   selecting, according to the published target data corresponding to the plurality of pieces of to-be-published multimedia data, target multimedia data from the plurality of pieces of multimedia data; and
   sending the target multimedia data to the terminal.

2. The method according to claim 1, wherein the acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position comprises:

   forming a user feature by using the first credit feature and the user attribute feature;
   acquiring the third credit feature according to an access user credit feature and a clicking user credit feature of the target media position; and
   acquiring the published target data according to the user feature, the content attribute feature, the position attribute feature and the third credit feature.

**3.** The method according to claim 2, wherein the acquiring the published target data according to the user feature, the content attribute feature, the position attribute feature and the third credit feature comprises:
acquiring the published target data by using the following formula:

$$W = \mu(a_0, u', c_0) * v(a_0, u', \ m),$$

wherein
W represents the published target data, u' represents the user feature, $a_0$ represents the content attribute feature, $c_0$ represents the position attribute feature, m represents the third credit feature, $\mu(a_0, u', c_0)$ represents a click-through rate when the multimedia data is published to the target media position, and $v(a_0, u', m)$ represents a click value when the multimedia data is published to the target media position.

**4.** The method according to claim 1, wherein the acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position comprises:

acquiring the second credit feature according to credit features and weight coefficients of a plurality of member users comprised in the user group to which the multimedia data belongs;
forming a content feature of the multimedia data by using the second credit feature and the content attribute feature; and
acquiring the published target data according to the user attribute feature, the content feature, and the position attribute feature.

**5.** The method according to claim 4, wherein the acquiring the published target data according to the user attribute feature, the content feature, and the position attribute feature comprises:
acquiring the published target data by using the following formula:

$$W = \mu(a', u_0, c_0) * v(a', u_0),$$

wherein
W represents the published target data, $u_0$ represents the user attribute feature, a' represents the content feature, $c_0$ represents the position attribute feature, $\mu(a', u_0, c_0)$ represents a click-through rate when the multimedia data is published to the target media position, and $v(a', u_0)$ represents a click value when the multimedia data is published to the target media position.

**6.** The method according to claim 1, wherein the acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position comprises:

forming a user feature by using the first credit feature and the user attribute feature;
acquiring the second credit feature according to credit features and weight coefficients of a plurality of member users comprised in the user group to which the multimedia data belongs;
forming a content feature of the multimedia data by using the second credit feature and the content attribute feature;
acquiring the third credit feature according to an access user credit feature and a clicking user credit feature of the target media position; and
acquiring the published target data according to the user feature, the content feature, the third credit feature and the position attribute feature.

**7.** The method according to claim 6, wherein the acquiring the published target data according to the user feature, the content feature, the third credit feature and the position attribute feature comprises:
acquiring the published target data by using the following formula:

$$W = \mu(a', u', c_0, \ m) * v(a', u', \ m),$$

wherein
W represents the published target data, u' represents the user feature, a' represents the content feature, $c_0$ represents the position attribute feature, m represents the third credit feature, $\mu(a', u', c_0, m)$ represents a click-through rate when the multimedia data is published to the target media position, and $v(a', u', m)$ represents a click value when the multimedia data is published to the target media position.

**8.** The method according to claim 2 or 6, wherein the acquiring the third credit feature according to an access user credit feature and a clicking user credit feature of the target media position comprises:

acquiring a first credit distribution feature according to credit features of a plurality of access users of the target media position in a plurality of preset time periods;
acquiring a second credit distribution feature according to credit features of a plurality of clicking users of the target media position in the plurality of preset time periods;
acquiring a difference feature between the first credit distribution feature and the second credit distribution feature; and
forming the third credit feature by using the first credit distribution feature and the difference feature.

9.  The method according to claim 4 or 6, wherein the acquiring the second credit feature according to credit features and weight coefficients of a plurality of member users comprised in the user group to which the multimedia data belongs comprises:

acquiring a product value of a credit feature and a weight coefficient of each of the member users, to obtain a weighted credit feature; and
acquiring a sum value of the weighted credit features of the plurality of member users, to obtain the second credit feature.

10. The method according to any one of claims 1 to 7, wherein the acquiring a user identity of a terminal, and determining a target media position of the terminal comprises:
receiving a presentation request sent by the terminal, the presentation request carrying the user identity and the target media position.

11. An apparatus for publishing multimedia data, comprising:

an acquiring module, configured to acquire a user identity of a terminal, and to determine a target media position of the terminal;
the acquiring module being further configured to acquire a plurality of pieces of to-be-published multimedia data, and for each piece of the to-be-published multimedia data, to acquire, according to at least one of a first credit feature, a second credit feature and a third credit feature, a user attribute feature of the user identity, a content attribute feature of the multimedia data, and a position attribute feature of the target media position, published target data when the multimedia data is published to the target media position, the first credit feature referring to a credit feature of a user that the user identity is corresponding to, the second credit feature referring to a credit feature of a user group to which the multimedia data belongs, the third credit feature referring to a credit feature of a user that the target media position is oriented to, and the user that the target media position is oriented to comprising an access user and a clicking user;
a selection module, configured to select, according to the published target data corresponding to the plurality of pieces of to-be-published multimedia data, target multimedia data from the plurality of pieces of multimedia data; and
a sending module, configured to send the target multimedia data to the terminal.

12. The apparatus according to claim 11, wherein the acquiring module is further configured to: form a user feature by using the first credit feature and the user attribute feature; acquire the third credit feature according to an access user credit feature and a clicking user credit feature of the target media position; and acquire the published target data according to the user feature, the content attribute feature, the position attribute feature and the third credit feature.

13. The apparatus according to claim 12, wherein the acquiring module is further configured to apply the following formula, to acquire the published target data:

$$W = \mu(a_0, u', c_0) * v(a_0, u',\ m),$$

wherein
W represents the published target data, u' represents the user feature, $a_0$ represents the content attribute feature, $c_0$ represents the position attribute feature, m represents the third credit feature, $\mu(a_0, u', c_0)$ represents a click-through rate when the multimedia data is published to the target media position, and $v(a_0, u', m)$ represents a click value when the multimedia data is published to the target media position.

14. The apparatus according to claim 11, wherein the acquiring module is further configured to acquire the second credit feature according to credit features and weight coefficients of a plurality of member users comprised in the user group to which the multimedia data belongs; form a content feature of the multimedia data by using the second credit feature and the content attribute feature; and acquire the published target data according to the user attribute feature, the content feature, and the position attribute feature.

15. The apparatus according to claim 14, wherein the acquiring module is further configured to apply the following formula, to acquire the published target data:

$$W = \mu(a', u_0, c_0) * v(a', u_0),$$

wherein

W represents the published target data, $u_0$ represents the user attribute feature, a' represents the content feature, $c_0$ represents the position attribute feature, $\mu(a',u_0,c_0)$ represents a click-through rate when the multimedia data is published to the target media position, and $v(a',u_0)$ represents a click value when the multimedia data is published to the target media position.

16. The apparatus according to claim 11, wherein the acquiring module is further configured to: form a user feature by using the first credit feature and the user attribute feature; acquire the second credit feature according to credit features and weight coefficients of a plurality of member users comprised in the user group to which the multimedia data belongs; form a content feature of the multimedia data by using the second credit feature and the content attribute feature; acquire the third credit feature according to an access user credit feature and a clicking user credit feature of the target media position; and acquire the published target data according to the user feature, the content feature, the third credit feature and the position attribute feature.

17. The apparatus according to claim 16, wherein the acquiring module is further configured to apply the following formula, to acquire the published target data:

$$W = \mu(a',u',c_0,\ m) * v(a',u',\ m),$$

wherein

W represents the published target data, u' represents the user feature, a' represents the content feature, $c_0$ represents the position attribute feature, m represents the third credit feature, $\mu(a',u',c_0,m)$ represents a click-through rate when the multimedia data is published to the target media position, and $v(a',u',m)$ represents a click value when the multimedia data is published to the target media position.

18. The apparatus according to claim 12 or 16, wherein the acquiring module is further configured to: acquire a first credit distribution feature according to credit features of a plurality of access users of the target media position in a plurality of preset time periods; acquire a second credit distribution feature according to credit features of a plurality of clicking users of the target media position in the plurality of preset time periods; acquire a difference feature between the first credit distribution feature and the second credit distribution feature; and form the third credit feature by using the first credit distribution feature and the difference feature.

19. The apparatus according to claim 14 or 16, wherein the acquiring module is further configured to acquire a product value of a credit feature and a weight coefficient of each of the member users, to obtain a weighted credit feature; and to acquire a sum value of the weighted credit features of the plurality of member users, to obtain the second credit feature.

20. The apparatus according to any one of claims 11 to 17, wherein the acquiring module is further configured to receive a presentation request sent by the terminal, the presentation request carrying the user identity and the target media position.

21. A server, comprising a central processing unit, a network interface, and a memory, the memory storing a set of program codes, and the central processing unit being configured to invoke the program codes stored in the memory by using a system bus, to perform the following operations:

acquiring a user identity of a terminal, and determining a target media position of the terminal; acquiring a plurality of pieces of to-be-published multimedia data;

for each piece of the to-be-published multimedia data, acquiring, according to at least one of a first credit feature, a second credit feature and a third credit feature, a user attribute feature of the user identity, a content attribute feature of the multimedia data, and a position attribute feature of the target media position, published target data when the multimedia data is published to the target media position, the first credit feature referring to a credit feature of a user that the user identity is corresponding to, the second credit feature referring to a credit feature of a user group to which the multimedia data belongs, the third credit feature referring to a credit feature of a user that the target media position is oriented to, and the user that the target media position is oriented to comprising an access user and a clicking user;

selecting, according to the published target data corresponding to the plurality of pieces of to-be-published multimedia data, target multimedia data from the plurality of pieces of multimedia data; and

sending the target multimedia data to the terminal.

22. The server according to claim 21, wherein the central processing unit is configured to invoke the program codes stored in the memory by using a system bus, to perform the following operations:

forming a user feature by using the first credit feature and the user attribute feature;

acquiring the third credit feature according to an access user credit feature and a clicking user credit feature of the target media position; and acquiring the published target data according to the user feature, the content attribute feature, the position attribute feature and the third credit feature.

23. The server according to claim 22, wherein the central processing unit is configured to invoke the program codes stored in the memory by using a system bus, to perform the following operations:
acquiring the published target data by using the following formula:

$$ W = \mu(a_0, u', c_0) * v(a_0, u', \ m), $$

wherein
W represents the published target data, u' represents the user feature, $a_0$ represents the content attribute feature, $c_0$ represents the position attribute feature, m represents the third credit feature, $\mu(a_0, u', c_0)$ represents a click-through rate when the multimedia data is published to the target media position, and $v(a_0, u', m)$ represents a click value when the multimedia data is published to the target media position.

24. The server according to claim 21, wherein the central processing unit is configured to invoke the program codes stored in the memory by using a system bus, to perform the following operations:

acquiring the second credit feature according to credit features and weight coefficients of a plurality of member users comprised in the user group to which the multimedia data belongs; forming a content feature of the multimedia data by using the second credit feature and the content attribute feature; and acquiring the published target data according to the user attribute feature, the content feature, and the position attribute feature.

25. The server according to claim 24, wherein the central processing unit is configured to invoke the program codes stored in the memory by using a system bus, to perform the following operations:
acquiring the published target data by using the following formula:

$$ W = \mu(a', u_0, c_0) * v(a', u_0), $$

wherein
W represents the published target data, $u_0$ repre-

sents the user attribute feature, a' represents the content feature, $c_0$ represents the position attribute feature, $\mu(a', u_0, c_0)$ represents a click-through rate when the multimedia data is published to the target media position, and $v(a', u_0)$ represents a click value when the multimedia data is published to the target media position.

26. The server according to claim 21, wherein the central processing unit is configured to invoke the program codes stored in the memory by using a system bus, to perform the following operations:

forming a user feature by using the first credit feature and the user attribute feature; acquiring the second credit feature according to credit features and weight coefficients of a plurality of member users comprised in the user group to which the multimedia data belongs; forming a content feature of the multimedia data by using the second credit feature and the content attribute feature; acquiring the third credit feature according to an access user credit feature and a clicking user credit feature of the target media position; and acquiring the published target data according to the user feature, the content feature, the third credit feature and the position attribute feature.

27. The server according to claim 26, wherein the central processing unit is configured to invoke the program codes stored in the memory by using a system bus, to perform the following operations:
acquiring the published target data by using the following formula:

$$ W = \mu(a', u', c_0, \ m) * v(a', u', \ m), $$

wherein
W represents the published target data, u' represents the user feature, a' represents the content feature, $c_0$ represents the position attribute feature, m represents the third credit feature, $\mu(a', u', c_0, m)$ represents a click-through rate when the multimedia data is published to the target media position, and $v(a', u', m)$ represents a click value when the multimedia data is published to the target media position.

28. The server according to claim 22 or 26, wherein the central processing unit is configured to invoke the program codes stored in the memory by using a system bus, to perform the following operations:

acquiring a first credit distribution feature according to credit features of a plurality of access users of the target media position in a plurality of preset time periods;
acquiring a second credit distribution feature according to credit features of a plurality of clicking users of the target media position in the plurality of preset time periods;
acquiring a difference feature between the first credit distribution feature and the second credit distribution feature; and
forming the third credit feature by using the first credit distribution feature and the difference feature.

29. The server according to claim 24 or 26, wherein the central processing unit is configured to invoke the program codes stored in the memory by using a system bus, to perform the following operations:

acquiring a product value of a credit feature and a weight coefficient of each of the member users, to obtain a weighted credit feature; and
acquiring a sum value of the weighted credit features of the plurality of member users, to obtain the second credit feature.

30. The server according to any one of claims 21 to 27, wherein the central processing unit is configured to invoke the program codes stored in the memory by using a system bus, to perform the following operations:
receiving a presentation request sent by the terminal, the presentation request carrying the user identity and the target media position.

31. A computer readable storage medium, storing at least one instruction, at least one program, a code set or an instruction set, and the instruction, the program, the code set or the instruction set being loaded and executed by a processor to implement the operations performed in the method for publishing multimedia data according to any one of claims 1 to 10.

System for delivering multimedia data

Terminal 1

Terminal 2

Server

Terminal 4

Terminal 3

FIG. 1

| Terminal | | Server |
|---|---|---|

201: When detecting a presentation operation on a media application page, the terminal sends a presentation request to the server

202: The server receives the presentation request sent by the terminal

203: A plurality of pieces of to-be-published multimedia data is acquired. For each piece of the multimedia data, the server acquires, according to at least one of a first credit feature, a second credit feature and a third credit feature, a user attribute feature of the user identity, a content attribute feature of the multimedia data, and a position attribute feature of the target media position, published target data when the multimedia data is published to the target media position

204: The server selects, according to the published target data corresponding to the plurality of pieces of to-be-published multimedia data, target multimedia data from the plurality of pieces of multimedia data

205: The server sends the target multimedia data to the terminal

206: When the terminal receives the target multimedia data, the target multimedia data is published to the target media position

FIG. 2

Acquiring module — 301

Selection module — 302

Sending module — 303

FIG. 3

400

Server

422 — Central processing unit    Power supply — 426

Operating system — 441

Data — 444

Application program — 442

Storage medium — 430

Memory — 432

Wired or wireless network interface — 450

Keyboard — 456

Input/ output interface — 458

FIG. 4

# INTERNATIONAL SEARCH REPORT

| International application No. |
| --- |
| PCT/CN2017/095251 |

## A. CLASSIFICATION OF SUBJECT MATTER

G06Q 30/02 (2012.01) i

According to International Patent Classification (IPC) or to both national classification and IPC

## B. FIELDS SEARCHED

Minimum documentation searched (classification system followed by classification symbols)

G06Q; G06F; H04W

Documentation searched other than minimum documentation to the extent that such documents are included in the fields searched

Electronic data base consulted during the international search (name of data base and, where practicable, search terms used)

WPI, EPODOC, CNPAT, CNKI: 用户, 年龄, 性别, 信用, 内容, 主题, 推荐, 推广, 推送, 投放, 广告, user, age, sex, credit, content, suject, recommend, extension, push, advertisement.

## C. DOCUMENTS CONSIDERED TO BE RELEVANT

| Category* | Citation of document, with indication, where appropriate, of the relevant passages | Relevant to claim No. |
| --- | --- | --- |
| X | CN 102033883 A (ALIBABA GROUP HOLDING LTD.) 27 April 2011 (27.04.2011), description, paragraphs [0002], [0020] and [0032]-[0051] | 1, 2, 4, 6, 10-12, 14, 16, 20-22, 24, 26, 30, 31 |
| A | CN 101192235 A (TENCENT TECHNOLOGY SHENZHEN CO., LTD.) 04 June 2008 (04.06.2008), entire document | 1-31 |
| A | CN 101459908 A (HUAWEI TECHNOLOGIES CO., LTD.) 17 June 2009 (17.06.2009), entire document | 1-31 |
| A | WO 2013063537 A1 (ORMONT JUSTIN et al.) 02 May 2013 (02.05.2013), entire document | 1-31 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 September 2017 | 28 September 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WANG, Mengsi Telephone No. (86-10) 62413393 |
| --- | --- |

Form PCT/ISA/210 (second sheet) (July 2009)

## INTERNATIONAL SEARCH REPORT
### Information on patent family members

International application No.

PCT/CN2017/095251

| Patent Documents referred in the Report | Publication Date | Patent Family | Publication Date |
|---|---|---|---|
| CN 102033883 A | 27 April 2011 | US 2011218859 A1 | 08 September 2011 |
| | | EP 2484113 A1 | 08 August 2012 |
| | | WO 2011041067 A1 | 07 April 2011 |
| | | JP 2013506195 A | 21 February 2013 |
| | | HK 1154678 A0 | 27 April 2012 |
| CN 101192235 A | 04 June 2008 | US 2010023394 A1 | 28 January 2010 |
| | | WO 2008125038 A1 | 23 October 2008 |
| CN 101459908 A | 17 June 2009 | WO 2009076889 A1 | 25 June 2009 |
| | | US 2010091965 A1 | 15 April 2010 |
| | | EP 2221760 A1 | 25 August 2010 |
| WO 2013063537 A1 | 02 May 2013 | US 2013110641 A1 | 02 May 2013 |
| | | US 2013110583 A1 | 2013 年 05 月 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610814122